# EUROPÄISCHE PATENTSCHRIFT

(11) **EP 3 123 034 B1**
(45) Veröffentlichungstag und Bekanntmachung des Hinweises auf die Patenterteilung: **31.01.2018**
(21) Anmeldenummer: 15716739.6
(22) Anmeldetag: 24.03.2015
(51) Int. Cl.: F15B 15/14

(54) **VERBINDUNGSANORDNUNG EINER KOLBENSTANGE**
PISTON ROD JOINT
SYSTÈME DE CONNEXION D'UNE TIGE DE PISTON

(30) Priorität: 27.03.2014 DE 102014205776
(43) Veröffentlichungstag der Anmeldung: 01.02.2017
(73) Patentinhaber: Schaeffler Technologies AG & Co. KG, 91074 Herzogenaurach (DE)
(72) Erfinder: NIESEN, Thomas, 76227 Karlsruhe (DE); POPP, Stephan, 76437 Rastatt (DE)
(86) Internationale Anmeldenummer: PCT/DE2015/200192
(87) Internationale Veröffentlichungsnummer: WO 2015/144168

(56) Entgegenhaltungen:
- WO-A1-2014/032666
- AT-B- 365 988
- DE-A1-102012 222 878

## Beschreibung

Die Erfindung betrifft eine Betätigungseinrichtung zur mechanischen Anbindung an einen Kolben eines Arbeitszylinders, insbesondere Geberzylinders, einer hydraulischen Brems- oder Kupplungsanlage. Die Betätigungseinrichtung umfasst eine Kolbenstange, die an einem Ende einen Kolbenstangenfuß aufweist, einen die Kolbenstange in seinem Inneren spielbehaftet aufnehmenden Anschlagring für den Kolbenstangenfuß, wobei der Anschlagring von dem Kolbenstangenfuß in zumindest einer Winkelposition der Kolbenstange relativ zu diesem Anschlagring durchtauchbar ist und eine Verliersicherungsvorrichtung zur Verhinderung eines solchen Durchtauchens, die einen Grundkörper und eine Klipsvorrichtung aufweist, mittels der die Verliersicherungsvorrichtung an dem Anschlagring lösbar befestigt ist. Die Betätigungseinrichtung ist also eine Baugruppe für einen entsprechenden Arbeitszylinder.

Die Erfindung betrifft weiterhin den entsprechenden Arbeitszylinder einer hydraulischen Brems- oder Kupplungsanlage mit einem Zylindergehäuse, einem in diesem Zylindergehäuse verschieblich gelagerten Kolben und einer entsprechenden Betätigungseinrichtung zur mechanischen Anbindung an den Kolben.

In der DE 10 2012 222 878 A1 ist ein Geberzylinder einer hydraulischen Kupplungsanlage mit einem Zylindergehäuse, einem in diesem Gehäuse verschieblich gelagerten Kolben und einer derartigen Betätigungseinrichtung zur mechanischen Anbindung an den Kolben beschrieben. An einem offenen Ende des Zylindergehäuses ist ein Anschlagring für das kolbenseitige Ende der Kolbenstange mit dem Kolbenstangenfuß vorgesehen. Hinter dem Anschlagring wird ein Streifring hinzugefügt, der dafür sorgt, dass kein Schmutz in das Zylindergehäuse gelangen kann. Der Streifring wird in axialer Richtung von dem Anschlagring und einer als Verliersicherungsring (Transportsicherungsring) ausgebildeten Verliersicherungsvorrichtung gehalten. In der Einleitung dieses Dokuments ist erwähnt, dass der Verliersicherungsring dazu an dem Anschlagring mittels Klipsverbindung angeklipst ist. Die Klipsverbindung ist zu der Anschlagfläche des Anschlagringes um 90° verdreht. Somit kann die Kolbenstange -genauer gesagt deren Kolbenstangenfuß- nicht mehr durch den Anschlagring, wenn sie verdreht wird, da sie gegen die Klipse des Verliersicherungsringes stößt. Die Kolbenstange kann also im Normalfall nicht mehr herausfallen.

Als zusätzliche Funktion ist es jedoch erwünscht, dass die Betätigungseinrichtung mit Anschlagring und angeklipster Verliersicherungsvorrichtung ein Drehen der Kolbenstange um 360° bezüglich der Längsachse des Arbeitszylinders ermöglicht. Dies ist beispielsweise bei einem Geberzylinder erwünscht, der wahlweise in Linkslenker- (LHD) und Rechtlenkerfahrzeugen (RHD) eingesetzt werden soll und die Kolbenstange somit je nach Fahrzeugtyp an der Produktionslinie beim Kunden oder im Reparaturfall in der Werkstatt für den Einbau positioniert wird. Um dies zu ermöglichen wird der Kolbenstangenfuß beim Drehen um 180° über die Klipsverbindung der Verliersicherung geführt. Durch die Kraft, die die Vorlastfeder im Inneren des Geberzylinders über die Kolbenstange auf die Klipsverbindung ausübt, besteht jedoch die Gefahr, dass sich die Rastelemente der Klipsverbindung vom Anschlagring trennen. Wird gleichzeitig die Kolbenstange aufgrund ihrer Schwenkfähigkeit aus der Längsachse des Geberzylinders ausgelenkt kann es zu einem Lösen der gesamten Verliersicherung aus dem Anschlagring und damit doch zu einem Verlust der Kolbenstange kommen. Eine solche Lösung ist im Stand der Technik Dokument WO 2014 032 666 offenbart. Es ist die Aufgabe der Erfindung eine Betätigungseinrichtung und einen Arbeitszylinder anzugeben, bei denen die oben erwähnten Schwierigkeiten überwunden werden.

Die Lösung der Aufgabe erfolgt erfindungsgemäß durch die Merkmale des unabhängigen Anspruchs 1. Bevorzugte Ausgestaltungen der Erfindung sind in den Unteransprüchen angegeben, die jeweils einzeln oder in Kombination einen Aspekt der Erfindung darstellen können. Bei der erfindungsgemäßen Betätigungseinrichtung zur mechanischen Anbindung an einen Kolben eines Arbeitszylinders einer hydraulischen Brems- oder Kupplungsanlage ist vorgesehen, dass die Klipsvorrichtung mindestens ein Klipselement mit (i) einem an dem Grundkörper befestigten und das Innere des Anschlagrings parallel zur Kolbenstange durchgreifenden Federarm und (ii) einem am Federarm angeordneten Rastvorsprung aufweist, der die dem Grundkörper gegenüberliegende Seite des Anschlagrings auf einer effektiven radialen Hintergrifflänge L hintergreift, wobei das verbleibende Spiel S der Anordnung aus Kolbenstange und mindestens einem Federarm im Inneren des Anschlagrings bei an dem Anschlagring oder dem Klipselement anliegendem Kolbenstangenfuß in der das Durchtauchen gestattenden Winkelposition kleiner ist als die Hintergrifflänge L des mindestens einen Rastvorsprungs. Es gilt also S < L. Die Betätigungseinrichtung ist -wie bereits erwähnt- eine Baugruppe für einen entsprechenden Arbeitszylinder, insbesondere einen Geberzylinder, einer hydraulischen Brems- oder Kupplungsanlage eines Kraftfahrzeugs.

Bei der erfindungsgemäßen Betätigungseinrichtung kann nun in der das Durchtauchen gestattenden Winkelposition das mindestens eine Klipselement nicht mehr soweit verformt werden, dass sich die Verliersicherungsvorrichtung vom Anschlagring lösen kann, da das verbleibende Spiel S nicht mehr groß genug ist, um den Rastvorsprung beziehungsweise die Rastvorsprünge des mindestens einen Klipselements passieren zu lassen. Mit anderen Worten stößt das Klipselement bereits an die Kolbenstange, bevor der Rastvorsprung vollständig hinter der hintergriffenen Kante auf der dem Grundkörper gegenüberliegenden Seite des Anschlagrings hervorgezogen werden kann.

Gemäß einer bevorzugten Ausgestaltung der Erfindung ist der im Inneren des Anschlagringes angeordnete Teil der Kolbenstange ein an den Kolbenstangenfuß angrenzender Axialabschnitt der Kolbenstange. Dabei ist insbesondere vorgesehen, dass die Kolbenstange in zumindest einem Axialunterabschnitt des sich an den Kolbenstangenfuß angrenzenden Axialabschnitts einen gegenüber mindestens einem weiteren Axialabschnitt der Kolbenstange vergrößerten Umfang bzw. Durchmesser aufweist.

Gemäß einer weiteren bevorzugten Ausgestaltung der Erfindung weist die Kolbenstange in dem an den Kolbenstangenfuß angrenzenden Axialabschnitt mindestens eine stegartige Struktur oder sonstige sich radial nach außen erstreckende Struktur auf. Denkbar ist beispielsweise auch eine von einem Bund gebildete Struktur. Bevorzugt bildet die Struktur den vergrößerten Umfang (den vergrößerten Durchmesser) der Kolbenstange in dem an den Kolbenstangenfuß angrenzenden Axialabschnitt.

Dabei ist in einer besonderen Ausführungsvariante der Erfindung vorgesehen, dass die sich radial nach außen erstreckende Struktur eine im Schnitt haifischflossenartige Kontur aufweist.

Gemäß einer weiteren bevorzugten Ausgestaltung der Erfindung ist vorgesehen, dass der mindestens eine Rastvorsprung radial ausgerichtet ist. Dabei weist der Rastvorsprung radial nach außen. In diesem Fall ist die tatsächliche Hintergrifflänge des mindestens einen Rastvorsprungs gleich der effektiven radialen Hintergrifflänge L.

Gemäß noch einer weiteren bevorzugten Ausführungsform der Erfindung sind mehrere Klipselemente vorgesehen. Dabei ist die effektive Hintergrifflänge L des gesamten Ensembles von Klipselementen größer als das verbleibende Spiel S. Vorzugsweise ist sogar der effektive Rastvorsprung jedes einzelnen Klipselements größer als das verbleibende Spiel S. Dabei ist bevorzugt vorgesehen, dass zumindest zwei der Klipselemente einander diametral gegenüberliegend angeordnet sind. In einer besonders bevorzugten Ausführungsform sind genau zwei Klipselemente vorgesehen, die einander diametral gegenüberliegend angeordnet sind.

Bei dem erfindungsgemäßen Arbeitszylinder mit dem Zylindergehäuse, dem in diesem Zylindergehäuse verschieblich gelagerten Kolben und der entsprechenden Betätigungseinrichtung zur mechanischen Anbindung an den Kolben ist vorgesehen, dass diese Betätigungseinrichtung als vorstehend genannte Betätigungseinrichtung ausgebildet ist. Die Betätigungseinrichtung umfasst (a) eine an einem Ende einen Kolbenstangenfuß aufweisende Kolbenstange, (b) einen die Kolbenstange in seinem Inneren spielbehaftet aufnehmenden Anschlagring für den Kolbenstangenfuß, wobei der Anschlagring von dem Kolbenstangenfuß in zumindest einer Winkelposition der Kolbenstange relativ zu diesem Anschlagring durchtauchbar ist und (c) eine Verliersicherungsvorrichtung zur Verhinderung eines solchen Durchtauchens, die einen Grundkörper und eine Klipsvorrichtung aufweist, mittels der sie an dem Anschlagring lösbar befestigt ist. Die Klipsvorrichtung weist mindestens ein Klipselement auf, welches seinerseits einen an der Verliersicherungsvorrichtung befestigten und das Innere des Anschlagrings parallel zur Kolbenstange durchgreifenden Federarm und einen die der Verliersicherungsvorrichtung gegenüberliegende Seite des Anschlagrings auf einer Hintergrifflänge L hintergreifenden Rastvorsprung aufweist, wobei das verbleibende Spiel S der Anordnung aus der Kolbenstange und dem mindestens einen Federarm im Inneren des Anschlagrings bei an dem Anschlagring oder dem Rastvorsprung anliegendem Kolbenstangenfuß kleiner ist als die effektive Hintergrifflänge L des mindestens einen Rastvorsprungs. Es gilt also: S < L.

Die gängigen Ausführungsformen und die generelle Funktion von Arbeitszylindern von hydraulischen Brems- oder Kupplungsanlagen sind aus einer Vielzahl von Patentanmeldungen und anderen Dokumenten der Anmelderin bekannt. An dieser Stelle sein beispielhaft noch einmal auf die eingangs erwähnte DE 10 2012 222 878 A1 verwiesen. Als Arbeitszylinder ist dort ein Geberzylinder einer hydraulischen Kupplungsanlage konkret beschrieben.

Gemäß einer bevorzugten Ausführungsform des erfindungsgemäßen Arbeitszylinders weist dieser eine auf den Kolben wirkenden Vorlastfeder auf, die den Kolben in eine Grundposition verbringt, bei der der Kolben und/oder der mit dem Kolben verbundene Kolbenstangenfuß in seiner Arbeitsstellung an einer Anschlagfläche des Anschlagrings anliegt. Die Vorlastfeder ist bevorzugt als Druckfeder ausgebildet.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigt:
Fig. 1: eine Betätigungseinrichtung mit einer Kolbenstange zur mechanischen Anbindung an einen Kolben eines Geberzylinders einer hydraulischen Kupplungsanlage gemäß einer ersten bevorzugten Ausführungsform der Erfindung, wobei sich die Kolbenstange in einer Auslieferungsposition befindet,
Fig. 2: die in Fig. 1 gezeigte Betätigungseinrichtung, deren Kolbenstange sich in einer gegenüber der Auslieferungsposition um 90° gedrehten Stellung befindet,
Fig. 3: die Betätigungseinrichtung in der in Fig. 2 gezeigten Stellung bei leicht verkippter Kolbenstange,
Fig. 4: eine Betätigungseinrichtung mit einer Kolbenstange zur mechanischen Anbindung an einen Kolben eines Geberzylinders einer hydraulischen Kupplungsanlage gemäß einer zweiten bevorzugten Ausführungsform der Erfindung, wobei sich die Kolbenstange in einer Auslieferungsposition befindet,
Fig. 5: die in Fig. 4 gezeigte Betätigungseinrichtung, deren Kolbenstange sich in einer gegenüber der Auslieferungsposition um 90° gedrehten Stellung befindet und
Fig. 6: die Betätigungseinrichtung in der in Fig. 5 gezeigten Stellung bei leicht verkippter Kolbenstange.

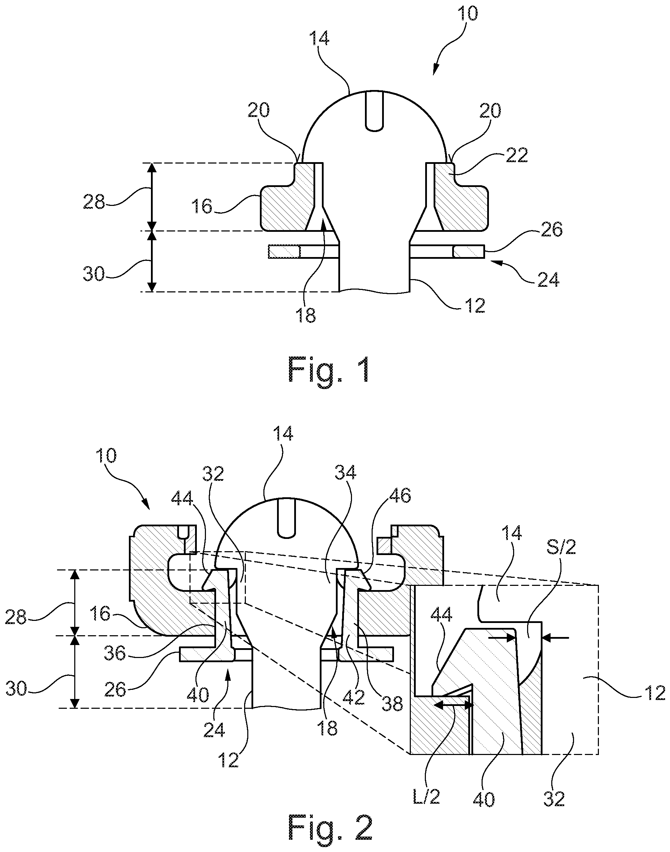

Die Fig. 1 zeigt eine Betätigungseinrichtung 10 eines als Geberzylinder einer hydraulischen Kupplungsanlage eines Kraftfahrzeugs ausgebildeten Arbeitszylinders in einer Schnittdarstellung. Diese Betätigungseinrichtung 10 ist also eine Baugruppe jenes Arbeitszylinders. Der Arbeitszylinder mit seinen Bauteilen Zylindergehäuse, im Zylindergehäuse verschieblich gelagerter Kolben, und Vorlastfeder zum Verbringen des Kolbens in einer Grundstellung ist als Ganzes jedoch nicht gezeigt.

Die Betätigungseinrichtung 10 weist eine Kolbenstange 12 auf, die ihrerseits an einem Ende einen Kolbenstangenfuß 14 besitzt. In Fig. 1 befindet sich die Kolbenstange 14 in einer Auslieferungsposition, die der Arbeitsposition des Arbeitszylinders für ein Rechtslenkerfahrzeug oder für ein Linkslenkerfahrzeug entspricht. Über den Kolbenstangenfuß 14 ist die Betätigungseinrichtung 10 an den Kolben des Arbeitszylinders mechanisch angebunden (nicht gezeigt). Bei einem als Geberzylinder ausgebildeten Arbeitszylinder ist diese Kolbenstange eine Betätigungsstange zum Betätigen der Kupplungsanlage über den direkt angesprochenen Kolben des Arbeitszylinders.

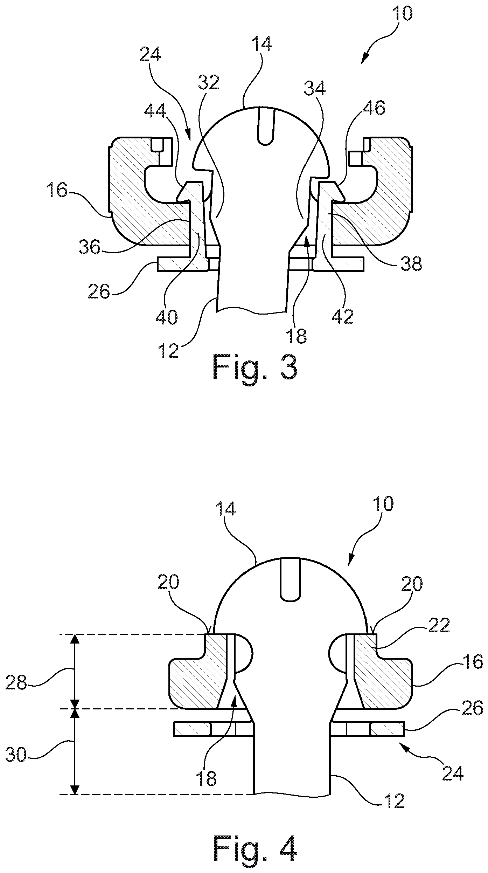

Neben der Kolbenstange 12 weist die Betätigungseinrichtung 10 auch einen Anschlagring 16 auf. Dieser Anschlagring 16 wird am Kopfende des Arbeitszylinders positioniert, nimmt die Kolbenstange 12 in seinem Inneren 18 spielbehaftet auf und bildet in der Arbeitsposition mindestens eine Anschlagfläche 20 für den Kolbenstangenfuß 16. Die Vorlastfeder des Arbeitszylinders bewegt den Kolben in Richtung des Anschlagrings 16. Bei unbetätigtem Arbeitszylinder führt die Vorlastfeder den Kolben bis in eine Grundposition, bei der der Kolbenstangenfuß in der Arbeits- bzw. Auslieferungsstellung an die Anschlagfläche 20 des Anschlagrings 16 anstößt. Diese Anschlagfläche 20 ist am Kopfende einer dem Kolben entgegenstrebenden Struktur 22 des Anschlagrings 16 ausgebildet. Auf der dem Kolben gegenüberliegenden Seite des Anschlagrings 16, also der Außenseite dieses Anschlagrings 16, ist der ebenfalls ringförmige Grundkörper 26 einer Verliersicherungsvorrichtung 24 angeordnet, die mittels einer in den Figuren 2 und 3 gezeigten Klipsvorrichtung am Anschlagring 16 angeklipst ist.

Der Anschlagring 16 umgibt die Kolbenstange 12 in dem an den Kolbenstangenfuß 14 angrenzenden Axialabschnitt 28 der Kolbenstange 12. Die Kolbenstange 12 weist in diesem Axialabschnitt 28 der Kolbenstange 12 einen Umfang bzw. Durchmesser auf, der größer ist als der Umfang bzw. Durchmesser eines angrenzenden weiteren Axialabschnitts 30 der Kolbenstange 12. Dies ist bei dem in den Figuren 1 - 3 gezeigten Beispiel durch beidseitig angebrachte stegartige Strukturen 32, 34 realisiert, die sich jeweils über den gesamten Axialabschnitt 28 erstrecken.

Die Figuren 2 und 3 zeigen die Betätigungseinrichtung 10 in einer weiteren Schnittdarstellung, bei der die Schnittfläche durch den Anschlagring 16 und die Verliersicherungsvorrichtung 24 gegenüber der Darstellung aus Fig. 1 um 90° gedreht ist. Dadurch werden die mit dem Grundkörper 26 der Verliersicherungsvorrichtung 24 einstückig verbundenen Klipselemente 36, 38 der Klipsvorrichtung sichtbar. Im gezeigten Beispiel wird die Klipsvorrichtung von genau zwei einander diametral gegenüberliegend angeordneteten Klipselementen 36, 38 gebildet. Gleichzeitig befindet sich auch die Kolbenstange 12 in einer gegenüber der Auslieferungsposition um 90° gedrehten Stellung. Somit ist die in den Figuren 2 und 3 gezeigte Schnittfläche durch die Kolbenstange 12 gegenüber der Darstellung der Fig. 1 unverändert.

Jedes einzelne der Klipselemente 36, 38 weist einen an der Verliersicherungsvorrichtung 24 befestigten Federarm 40, 42 auf, der das Innere 18 des Anschlagrings 16 parallel zur Kolbenstange 12 durchgreift. Weiterhin weist jedes der Klipselemente 36, 38 am freien Ende des jeweiligen Federarms 40, 42 einen nach radial außen weisenden Rastvorsprung 44, 46 auf, der eine Hintergrifflänge L/2 besitzt. Mit den Rastvorsprüngen 44, 46 hintergreift jedes der Klipselemente 36, 38 die dem Grundkörper 26 der Verliersicherungsvorrichtung 24 gegenüberliegende Seite des Anschlagrings 16. Insgesamt ergibt sich also eine effektive Hintergrifflänge L. Das verbleibende Spiel S der Anordnung aus Kolbenstange 12 und den Federarmen 40, 44 im Inneren 18 des Anschlagrings 16 in der (hier gezeigten) das Durchtauchen gestattenden Winkelposition ergibt sich zu 2 x S/2 auf jeder Seite der Kolbenstange 12. Dieses Spiel S ist deutlich kleiner als die Hintergrifflänge L der beiden Rastvorsprünge. Es gilt somit S < L.

Fig. 2 zeigt die Position in der der Kolbenstangenfuß 14 mit seinem Anschlag auf der Verliersicherungsvorrichtung 24 liegt und ein Verlust der Kolbenstange 12 ohne die vorstehend beschriebenen Größenverhältnisse auftreten kann. In dem vergrößert dargestellten Teil der Fig. 2 wird das Sicherungsprinzip noch einmal deutlich dargestellt. Der Überhang L/2 der Rastnase 44, 46 ist größer als der Spalt S/2 zwischen Verliersicherungsvorrichtung 24 und Struktur 32, 34 der Kolbenstange 12. Die Fig. 3 zeigt, dass die Sicherungsfunktion auch bei einem Kippen der Kolbenstange 12 erfüllt wird.

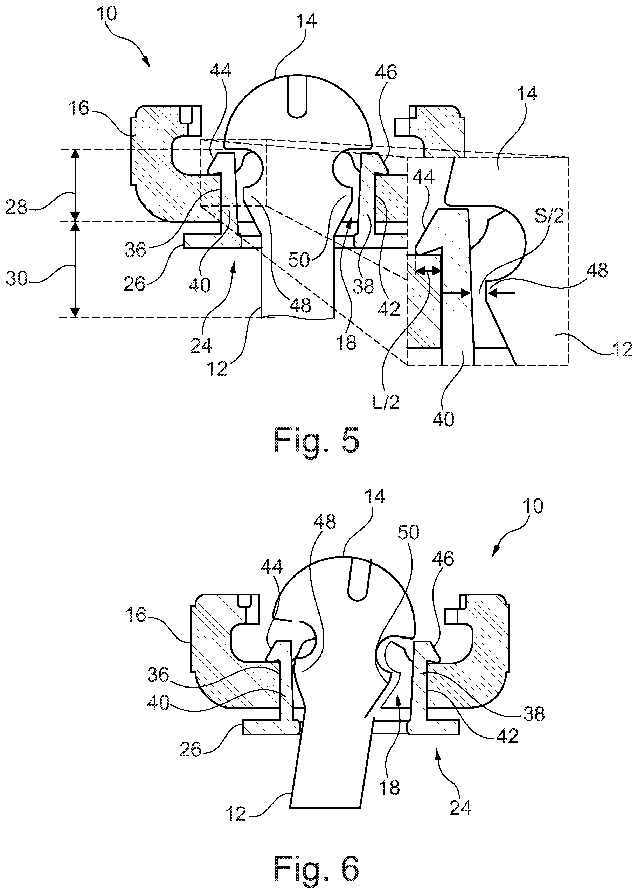

Die Figuren 4 bis 6 entsprechen im Wesentlichen den Figuren 1 bis 3, sodass hier nur auf die Unterschiede eingegangen werden soll. Dabei entspricht die Darstellung in Fig. 4 der Darstellung in Fig. 1, die Darstellung in Fig. 5 der Darstellung in Fig. 2 und die Darstellung in Fig. 6 der Darstellung in Fig. 3.

Die Kolbenstange 12 weist bei dem in den Figuren 4 bis 6 dargestellten Ausführungsbeispiel in dem an den Kolbenstangenfuß 14 angrenzenden Axialabschnitt 28 mindestens eine sich radial nach außen erstreckende Struktur 48, 50 auf, die eine im Schnitt haifischflossenartige Kontur besitzt. Dadurch weist die Kolbenstange 12 in zumindest einem Axialunterabschnitt des sich an den Kolbenstangenfuß 14 angrenzenden Axialabschnitts 28 einen gegenüber mindestens einem weiteren Axialabschnitt 30 der Kolbenstange 12 vergrößerten Durchmesser auf.

Es ergeben sich folgende konkrete Maßnahmen und folgende daraus resultierende Vorteile:
Durch eine derartig ausgestaltete Betätigungseinrichtung 10 beziehungsweise einen derartig ausgestalteten Arbeitszylinder wird ein Verlieren der Kolbenstange 12 während des Transports gerade für solche Zylinder verhindert, bei denen sich die im Anschlagring 16 gelagerte Kolbenstange 12 um 360° um die Längsachse drehen kann. Dies wird dadurch erreicht, dass die zwischen der Kolbenstange 12 und dem Anschlagring 16 angeordnete Verliersicherungsvorrichtung 24 und/oder der Kolbenstangenfuß 14 selbst in ihren Abmaßen angepasst werden. Hierfür wird der Durchmesser Axialabschnitt 28 unterhalb der Abstützfläche derart geändert, dass der (mittlere) Abstand S/2 der Kolbenstange 12 zum Anschlagring 16 an dieser Position zu jeder Zeit kleiner ist als die effektive Hintergrifflänge L/2 der auf dem Anschlagring 16 aufliegenden Teils des Rastvorsprungs 44, 46 des jeweiligen Klipselements 36, 38. Letztere Länge kann entsprechend vergrößert werden.

### Bezugszeichenliste

- 10: Betätigungseinrichtung
- 12: Kolbenstange
- 14: Kolbenstangenfuß
- 16: Anschlagring
- 18: Inneres (Anschlagring)
- 20: Anschlagfläche
- 22: Struktur
- 24: Verliersicherungsvorrichtung
- 26: Grundkörper
- 28: Axialabschnitt
- 30: Axialabschnitt, weiterer
- 32: Struktur, stegartig
- 34: Struktur, stegartig
- 36: Klipselement
- 38: Klipselement
- 40: Federarm
- 42: Federarm
- 44: Rastvorsprung
- 46: Rastvorsprung
- 48: Struktur mit Haifischflossenartiger Kontur
- 50: Struktur mit Haifischflossenartiger Kontur

## Patentansprüche

1. Betätigungseinrichtung (10) zur mechanischen Anbindung an einen Kolben eines Arbeitszylinders, insbesondere Geberzylinders, einer hydraulischen Brems- oder Kupplungsanlage, mit
- einer Kolbenstange (12), die an einem Ende einen Kolbenstangenfuß (14) aufweist,
- einem die Kolbenstange (12) in seinem Inneren (18) spielbehaftet aufnehmenden Anschlagring (16) für den Kolbenstangenfuß (14), wobei der Anschlagring (16) von dem Kolbenstangenfuß (14) in zumindest einer Winkelposition der Kolbenstange (12) relativ zu dem Anschlagring (16) durchtauchbar ist und
- einer Verliersicherungsvorrichtung (24) zur Verhinderung eines solchen Durchtauchens, die einen Grundkörper (26) und eine Klipsvorrichtung aufweist, mittels der sie an dem Anschlagring (16) lösbar befestigt ist,
wobei die Klipsvorrichtung mindestens ein Klipselement (36, 38) mit
- einem an dem Grundkörper (26) befestigten und das Innere (18) des Anschlagrings (16) parallel zur Kolbenstange (12) durchgreifenden Federarm (40, 42) und
- einem am Federarm (40, 42) angeordneten Rastvorsprung (44, 46) aufweist, der die dem Grundkörper (26) gegenüberliegende Seite des Anschlagrings (16) auf einer effektiven radialen Hintergrifflänge L hintergreift, **dadurch gekennzeichnet, dass** das verbleibende Spiel S
der Anordnung aus Kolbenstange (12) und mindestens einem Federarm (44, 46) im Inneren (18) des Anschlagrings (16) bei an dem Anschlagring (16) oder dem Klipselement (36, 38) anliegendem Kolbenstangenfuß (14) in der das Durchtauchen gestattenden Winkelposition kleiner ist als die Hintergrifflänge L des mindestens einen Rastvorsprungs (S < L).

2. Betätigungseinrichtung nach Anspruch 1, **dadurch gekennzeichnet, dass** der im Inneren des Anschlagringes (16) angeordnete Teil der Kolbenstange (12) ein an den Kolbenstangenfuß (14) angrenzender Axialabschnitt (28) der Kolbenstange (12) ist.

3. Betätigungseinrichtung nach Anspruch 2, **dadurch gekennzeichnet, dass** die Kolbenstange (12) in zumindest einem Axialunterabschnitt des sich an den Kolbenstangenfuß (14) angrenzenden Axialabschnitts (28) einen gegenüber mindestens einem weiteren Axialabschnitt (30) der Kolbenstange (12) vergrößerten Durchmesser aufweist.

4. Betätigungseinrichtung nach Anspruch 2 oder 3, **dadurch gekennzeichnet, dass** die Kolbenstange in dem an den Kolbenstangenfuß (14) angrenzenden Axialabschnitt (28) mindestens eine stegartige Struktur (32, 34) oder sonstige sich radial nach außen erstreckende Struktur (48, 50) aufweist.

5. Betätigungseinrichtung nach Anspruch 4, **dadurch gekennzeichnet, dass** die sich radial nach außen erstreckende Struktur (48, 50) eine im Schnitt haifischflossenartige Kontur aufweist.

6. Betätigungseinrichtung nach Anspruch 5, **dadurch gekennzeichnet, dass** der mindestens eine Rastvorsprunge (44, 46) radial ausgerichtet ist.

7. Betätigungseinrichtung nach einem der Ansprüche 1 bis 6, **dadurch gekennzeichnet, dass** mehrere Klipselemente (36, 38) vorgesehen sind.

8. Betätigungseinrichtung nach Anspruch 7, **dadurch gekennzeichnet, dass** zumindest zwei der Klipselemente (36, 38) einander diametral gegenüberliegend angeordnet sind.

9. Arbeitszylinder einer hydraulischen Brems- oder Kupplungsanlage mit einem Zylindergehäuse, einem in diesem Zylindergehäuse verschieblich gelagerten Kolben und einer Betätigungseinrichtung (10) zur mechanischen Anbindung an den Kolben, wobei diese Betätigungseinrichtung (10) die folgenden Komponenten aufweist:
- eine an einem Ende einen Kolbenstangenfuß (14) aufweisende Kolbenstange (12),
- einen die Kolbenstange (12) in seinem Inneren (18) spielbehaftet aufnehmenden Anschlagring (16) für den Kolbenstangenfuß (14), wobei der Anschlagring (16) von dem Kolbenstangenfuß (14) in zumindest einer Winkelposition der Kolbenstange (12) relativ zu diesem Anschlagring (16) durchtauchbar ist und
- eine Verliersicherungsvorrichtung (24) zur Verhinderung eines solchen Durchtauchens, die einen Grundkörper (26) und eine Klipsvorrichtung aufweist, mittels der sie an dem Anschlagring (16) lösbar befestigt ist,
**dadurch gekennzeichnet, dass** die Betätigungseinrichtung (10) nach einem der Ansprüche 1 bis 8 ausgebildet ist.

10. Arbeitszylinder nach Anspruch 9, **gekennzeichnet durch** eine auf den Kolben wirkenden Vorlastfeder, die den Kolben in eine Grundposition verbringt, bei der der Kolben und/oder der mit dem Kolben verbundene Kolbenstangenfuß (14) in seiner Arbeitsstellung an einer Anschlagfläche (20) des Anschlagrings (16) anliegt.

## Claims

1. Actuating device (10) for the mechanical connection to a piston of a working cylinder, in particular master cylinder, of a hydraulic brake or clutch assembly, having
- a piston rod (12) which on one end has a piston rod foot (14),
- a stop ring (16) for the piston rod foot (14), which stop ring, in its interior (18), receives the piston rod (12) with play, wherein the stop ring (16) can be passed through by the piston rod foot (14) in at least one angular position of the piston rod (12) relative to the stop ring (16), and
- a captive retention device (24) for preventing such a passage through, which captive retention device has a main body (26) and a clip device by means of which it is detachably fastened to the stop ring (16),
wherein the clip device has at least one clip element (36, 38) with
- a spring arm (40, 42) which is fastened to the main body (26) and which extends through the interior (18) of the stop ring (16) parallel to the piston rod (12), and
- a detent projection (44, 46) which is arranged on the spring arm (40, 42) and which, over an effective radial engaging-behind length L, engages behind that side of the stop ring (16) which is situated opposite the main body (26), **characterized in that**, when the piston rod foot (14) is abutting against the stop ring (16) or against the clip element (36, 38), in the angular position which permits the passage through, the remaining play S of the arrangement composed of piston rod (12) and at least one spring arm (44, 46) in the interior (18) of the stop ring (16) is smaller than the engaging-behind length L of the at least one detent projection (S < L).

2. Actuating device according to Claim 1, **characterized in that** that part of the piston rod (12) which is arranged in the interior of the stop ring (16) is an axial section (28), adjoining the piston rod foot (14), of the piston rod (12).

3. Actuating device according to Claim 2, **characterized in that** the piston rod (12), in at least one axial subsection of the axial section (28) adjoining the piston rod foot (14), has a diameter which is increased in relation to at least one further axial section (30) of the piston rod (12).

4. Actuating device according to Claim 2 or 3, **characterized in that**, in the axial section (28) adjoining the piston rod foot (14), the piston rod has at least one web-like structure (32, 34) or some other radially outwardly extending structure (48, 50).

5. Actuating device according to Claim 4, **characterized in that** the radially outwardly extending structure (48, 50) has a shark-fin-like contour in section.

6. Actuating device according to Claim 5, **characterized in that** the at least one detent projection (44, 46) is oriented radially.

7. Actuating device according to one of Claims 1 to 6, **characterized in that** multiple clip elements (36, 38) are provided.

8. Actuating device according to Claim 7, **characterized in that** at least two of the clip elements (36, 38) are arranged diametrically opposite one another.

9. Working cylinder of a hydraulic brake or clutch assembly, having a cylinder housing, having a piston mounted displaceably in said cylinder housing, and having an actuating device (10) for the mechanical connection to the piston, wherein said actuating device (10) has the following components:
- a piston rod (12) which on one end has a piston rod foot (14),
- a stop ring (16) for the piston rod foot (14), which stop ring, in its interior (18), receives the piston rod (12) with play, wherein the stop ring (16) can be passed through by the piston rod foot (14) in at least one angular position of the piston rod (12) relative to said stop ring (16), and
- a captive retention device (24) for preventing such a passage through, which captive retention device has a main body (26) and a clip device by means of which it is detachably fastened to the stop ring (16),
**characterized in that** the actuating device (10) is designed according to one of Claims 1 to 8.

10. Working cylinder according to Claim 9, **characterized by** a preload spring which acts on the piston and which moves the piston into a main position in which the piston and/or the piston rod foot (14) connected to the piston bears, in its working position, against a stop surface (20) of the stop ring (16).

## Revendications

1. Dispositif d'actionnement (10) destiné à être relié mécaniquement au piston d'un cylindre de travail, en particulier d'un cylindre pilote, d'une installation hydraulique de freinage ou d'embrayage, et présentant
une tige de piston (12) dotée à une extrémité d'un pied (14) de tige de piston,
un anneau de butée (16) du pied (14) de tige de piston, dont l'intérieur (18) reprend avec un jeu la tige de piston (12), la bague de butée (16) pouvant être traversée par le pied (14) de tige de piston en au moins une position angulaire de la tige de piston (12) par rapport à la bague de butée (16) et
un ensemble (24) empêchant le détachement, qui empêche cette traversée et qui présente un corps de base (26) et un ensemble d'accrochage élastique par lequel il est fixé de manière libérable sur la bague de butée (16),
l'ensemble d'accrochage élastique présentant au moins un élément d'accrochage élastique (36, 38) présentant
un bras de ressort (40, 42) fixé sur le corps de base (26) et traversant l'intérieur (18) de la bague de butée (16) parallèlement à la tige de piston (12) et
une saillie d'encliquetage (44, 46) disposée sur le bras élastique (40, 42) et qui chevauche par l'arrière le côté de la bague de butée (16) situé face au corps de base (26) sur une longueur radiale effective L d'accrochage par l'arrière,
**caractérisé en ce que**
le jeu résiduel S de l'agencement constitué de la tige de piston (12) et d'au moins un bras élastique (44, 46) à l'intérieur (18) de la bague de butée (16), lorsque le pied (14) de la tige de piston repose sur la bague de butée (16) ou sur l'élément d'accrochage élastique (36, 38) dans la position angulaire permettant l'enfoncement est plus petit que la longueur L d'accrochage par l'arrière de la ou des saillies d'encliquetage (S < L).

2. Dispositif d'actionnement selon la revendication 1, **caractérisé en ce que** la partie de la tige de piston (12) disposée à l'intérieur de la bague de butée (16) est une section axiale (28) de la tige de piston (12) adjacente au pied (14) de la tige de piston.

3. Dispositif d'actionnement selon la revendication 2, **caractérisé en ce que** dans au moins une sous-section axiale de la section axiale (28) adjacente au pied (14) de la tige de piston, la tige de piston (12) présente un diamètre plus grand que dans au moins une autre section axiale (30) de la tige de piston (12).

4. Dispositif d'actionnement selon les revendications 2 ou 3, **caractérisé en ce que** dans la section axiale (28) adjacente au pied (14) de la tige de piston, la tige de piston présente au moins une structure (32, 34) en nervure ou une autre structure (48, 50) qui s'étend radialement vers l'extérieur.

5. Dispositif d'actionnement selon la revendication 4, **caractérisé en ce que** la structure (48, 50) qui s'étend radialement vers l'extérieur présente en coupe transversale un contour en aileron de requin.

6. Dispositif d'actionnement selon la revendication 5, **caractérisé en ce que** la ou les saillies d'encliquetage (44, 46) sont orientées radialement.

7. Dispositif d'actionnement selon l'une des revendications 1 à 6, **caractérisé en ce qu'**il présente plusieurs éléments d'accrochage élastique (36, 38).

8. Dispositif d'actionnement selon la revendication 7, **caractérisé en ce qu'**au moins deux des éléments d'accrochage élastique (36, 38) sont disposés en positions diamétralement opposées.

9. Cylindre de travail d'une installation hydraulique de freinage ou d'embrayage, présentant un boîtier de cylindre, un piston monté à coulissement dans ce boîtier de cylindre et un dispositif d'actionnement (10) destiné à être relié mécaniquement au piston, ce dispositif d'actionnement (10) présentant les composants suivantes :
une tige de piston (12) dotée à une extrémité d'un pied (14) de tige de piston,
un anneau de butée (16) du pied (14) de tige de piston, dont l'intérieur (18) reprend avec un jeu la tige de piston (12), la bague de butée (16) pouvant être traversée par le pied (14) de tige de piston en au moins une position angulaire de la tige de piston (12) par rapport à la bague de butée (16) et
un ensemble (24) empêchant le détachement, qui empêche cette traversée et qui présente un corps de base (26) et un ensemble d'accrochage élastique par lequel il est fixé de manière libérable sur la bague de butée (16),
**caractérisé en ce que**
l e dispositif d'actionnement (10) est configuré selon l'une des revendications 1 à 8.

10. Cylindre de travail selon la revendication 9, **caractérisé par** un ressort de précontrainte qui agit sur le piston et qui amène le piston dans une position de base dans laquelle le piston et/ou le pied (14) de la tige de piston relié au piston reposent dans la position de travail sur une surface de butée (20) de la bague de butée (16).
